(19) Europäisches Patentamt / European Patent Office / Office européen des brevets

(11) **EP 4 699 897 A1**

(12) **EUROPEAN PATENT APPLICATION**
published in accordance with Art. 153(4) EPC

(43) Date of publication:
**25.02.2026 Bulletin 2026/09**

(21) Application number: 24929270.7

(22) Date of filing: **26.11.2024**

(51) International Patent Classification (IPC):
**B61L 27/53** (2022.01)

(86) International application number:
**PCT/CN2024/134670**

(87) International publication number:
**WO 2025/189826 (18.09.2025 Gazette 2025/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2024 CN 202410298922**

(71) Applicant: **CRSC Research & Design Institute Group Co., Ltd.**
**Beijing 100070 (CN)**

(72) Inventors:
• **LIU, Longbiao**
  **Beijing 100070 (CN)**
• **YIN, Chunlei**
  **Beijing 100070 (CN)**
• **YE, Weigao**
  **Beijing 100070 (CN)**
• **HU, Yichao**
  **Beijing 100070 (CN)**
• **LI, Jiangzhe**
  **Beijing 100070 (CN)**

(74) Representative: **Samson & Partner Patentanwälte mbB**
**Widenmayerstraße 6**
**80538 München (DE)**

(54) **TURNOUT POWER CURVE STATE MONITORING METHOD AND APPARATUS**

(57) The present application relates to the technical field of fault monitoring for rail transit equipment, and in particular, to a method and device for monitoring a state of a switch power curve. The method includes: acquiring first feature information of a real-time switch action power curve; acquiring second feature information of switch action power curves in different operating states; based on a grey relational analysis method and/or a fuzzy clustering method, calculating a similarity between the first feature information and the second feature information corresponding to each fault type; and determining an operating state corresponding to the real-time switch action power curve based on the similarity. The present application provides an intelligent method and system for diagnosing an abnormality in an electrical characteristic curve of railway equipment, which have higher accuracy, degree of automation, and robustness. By using a fault diagnosis method based on digital signal processing, fault features of switch action power curve data are effectively extracted, thereby meeting various fault detection requirements, simplifying a structure of a classifier, and improving the precision and efficiency of fault diagnosis.

Acquire first feature information of a real-time switch action power curve — 11

Acquire second feature information of switch action power curves in different operating states — 12

Based on a grey relational analysis method and/or a fuzzy clustering method, calculating a similarity between the first feature information and the second feature information corresponding to each fault type — 13

Determine an operating state corresponding to the real-time switch action power curve based on the similarity — 14

FIG. 1

EP 4 699 897 A1

**Description**

**TECHNICAL FIELD**

The present application relates to the technical field of fault monitoring for rail transit equipment, and in particular, to a method and device for monitoring a state of a switch power curve.

**BACKGROUND ART**

The electrical characteristic curve of railway equipment is an important indicator for describing the electrical performance of the equipment, and is of great significance for monitoring an operating state and diagnosing faults of the equipment. As one of the three major outdoor components of railway signaling equipment, the switch is a line connection device that enables rolling stock to transfer from one track to another, and it is also one of the weak links of the track. Usually, a large number of switches are laid at stations and marshalling yards, which can give full play to the line capacity and has a significant impact on the safety and efficiency of railway transportation. Therefore, it is very important to determine whether the switch equipment is in normal operation, whether there are abnormal conditions, and the types of possible faults by analyzing the action power curve of the switch. However, the current railway signal monitoring system ensures the safe and reliable operation of switches by means of regular maintenance and skylight maintenance. This maintenance method is not only inefficient and labor-intensive for workers, but also relies solely on workers' experience for fault identification, which can easily lead to false determination and missed determination, thus endangering train operation safety.

The currently popular solution is abnormality diagnosis of electrical characteristic curves based on machine learning and data mining technologies. This method utilizes a large amount of historical data for training, and achieves abnormality diagnosis of electrical characteristic curves through modeling. The basic process of this method includes: data acquisition and preprocessing; feature extraction and selection; model building and training; and abnormality identification and diagnosis. Although the existing technical solution improves the abnormality diagnosis accuracy of the electrical characteristic curves to a certain extent, it still has the following shortcomings:

For new abnormal conditions, the model's generalization capability is limited and may not accurately identify and diagnose them; during data acquisition and preprocessing, the handling of noise and interference is still inadequate, which may affect the reliability of diagnostic results; and methods for feature extraction and selection may be limited by human experience and lack automated and intelligent feature selection capabilities.

**SUMMARY**

To solve at least one of the technical problems in the above technology to a certain extent, the present application provides a method for monitoring a state of a switch power curve, including:

acquiring first feature information of a real-time switch action power curve;

acquiring second feature information of switch action power curves in different operating states;

based on a grey relational analysis method and/or a fuzzy clustering method, calculating a similarity between the first feature information and the second feature information corresponding to each fault type; and

determining an operating state corresponding to the real-time switch action power curve based on the similarity.

Preferably, the acquiring first feature information of a real-time switch action power curve includes:

acquiring an intrinsic mode function (IMF) component of the real-time switch action power curve; and

acquiring a fuzzy entropy of the IMF component as the first feature information.

Preferably, the acquiring an IMF component of the real-time switch action power curve includes: decomposing the real-time switch action power curve based on complementary ensemble empirical mode decomposition (CEEMD) to obtain the IMF component.

Preferably, after determining an operating state corresponding to the real-time switch action power curve based on the similarity, the method further includes:

constructing a similarity set based on several calculated similarities;

sorting the similarity set in descending order of the similarities;

determining whether operating states corresponding to first several similarities are all normal or all abnormal; if the operating states corresponding to the first several similarities are not all normal or not all abnormal, determining a difference between the first several similarities; and

when it is determined that the difference between the first several similarities is less than a threshold, performing a secondary determination on the operating state corresponding to the real-time switch action power curve based on at least one of a comparative value method, a comparative amplitude method, or a sequential value method.

Preferably, the performing a determination on the operating state corresponding to the real-time switch action power curve based on a comparative value method includes:

acquiring a maximum value among values of several normal switch action power curves at a target time point;

correcting the maximum value based on a preset static threshold to obtain a reference maximum value; and

determining whether a value of the real-time switch action power curve at the target time point is greater than the reference maximum value, and if the value of the real-time switch action power curve at the target time point is greater than the reference maximum value, determining that the real-time switch action power curve undergoes a sudden increase at the target time point.

Preferably, the performing a determination on the operating state corresponding to the real-time switch action power curve based on a comparative amplitude method includes:

acquiring a maximum amplitude of several normal switch action power curves at a target time point;

correcting the maximum amplitude based on a preset static threshold to obtain a reference maximum amplitude; and

determining whether an amplitude of the real-time switch action power curve at the target time point is greater than zero and the reference maximum amplitude, and if the amplitude of the real-time switch action power curve at the target time point is greater than zero and the reference maximum amplitude, determining that the real-time switch action power curve undergoes a sudden increase at the target time point.

Preferably, the performing a determination on the operating state corresponding to the real-time switch action power curve based on a sequential value method includes:

acquiring target data of the real-time switch action power curve at a target time point;

acquiring a difference between the target data and each piece of data in a preset time window before the target time point, and determining the number of differences greater than a preset static threshold; and

when it is determined that the number of differences is greater than the threshold, determining that the target data is abnormal.

Preferably, the static threshold is determined based on historical switch action power curve data.
The present application further provides a system for monitoring a state of a switch power curve, including:

a first acquisition module, configured to acquire first feature information of a real-time switch action power curve;

a second acquisition module, configured to acquire second feature information of switch action power curves in different operating states;

a first calculation module, configured to calculate, based on a grey relational analysis method and/or a fuzzy clustering method, a similarity between the first feature information and the second feature information corresponding to each fault type; and

a state determination module, configured to determine an operating state corresponding to the real-time switch action power curve based on the similarity.

The present application further provides a computer-readable storage medium, having a computer program or instruction stored thereon, where when executed by a processor, the computer program or instruction is at least used to implement the above method.

Compared with the prior art, the present application has the following beneficial effects: the present application provides an intelligent method and system for diagnosing an abnormality in an electrical characteristic curve of railway equipment, which have higher accuracy, degree of automation, and robustness. By using a fault diagnosis method based on digital signal processing, fault features of switch action power curve data are effectively extracted, thereby meeting various fault detection requirements, simplifying a structure of a classifier, and improving the precision and efficiency of fault diagnosis.

Other features and advantages of the present application will be described in the following specification, and will become apparent in part from the specification, or will be understood by implementing the present application. The objective and other advantages of the present application may be achieved and obtained through the structures particularly indicated in the specification and the accompanying drawings.

The technical solution of the present application is further described in detail below with reference to the accompanying drawings and embodiments.

**BRIEF DESCRIPTION OF THE DRAWINGS**

The accompanying drawings are used to provide further understanding of the present application and form a part of the specification. They are used together with the embodiments of the present application to explain the present application and do not limit the present application. In the drawings:

FIG. 1 is a schematic diagram of a method for monitoring a state of a switch power curve provided in the present application;

FIG. 2 is a flowchart of feature information extraction based on CEEMD decomposition provided in an embodiment;

FIG. 3 is a flowchart of IMF component acquisition through CEEMD decomposition of a signal provided in an embodiment;

FIG. 4 is a flowchart of fault diagnosis based on grey relational analysis and fuzzy clustering provided in an embodiment;

FIG. 5 is a flowchart of fault diagnosis based on a grey relational analysis method provided in an embodiment;

FIG. 6 is a flowchart of fault diagnosis based on a fuzzy clustering method provided in an embodiment;

FIG. 7 is a flowchart of enhanced fault diagnosis provided in an embodiment;

FIG. 8 is a schematic diagram of a method for monitoring a state of a switch power curve provided in an embodiment;

FIG. 9 is a schematic diagram of a system for monitoring a state of a switch power curve provided in an embodiment; and

FIG. 10 is a schematic diagram of a computer-readable storage medium provided in an embodiment.

**DETAILED DESCRIPTION**

The present application is described below with reference to the accompanying drawings. The preferred embodiments described herein are only used for illustrating and explaining the present application, and are not intended to limit the present application.

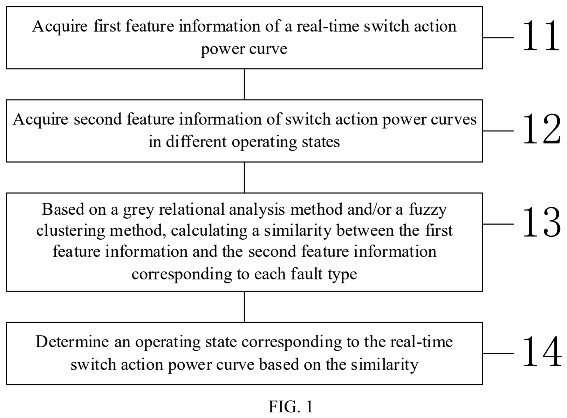

FIG. 1 shows a method for monitoring a state of a switch power curve provided in the present application, including:

S11: acquiring first feature information of a real-time switch action power curve;

S12: acquiring second feature information of switch action power curves in different operating states;

S13: based on a grey relational analysis method and/or a fuzzy clustering method, calculating a similarity between the first feature information and the second feature information corresponding to each fault type; and

S14: determining an operating state corresponding to the real-time switch action power curve based on the similarity.

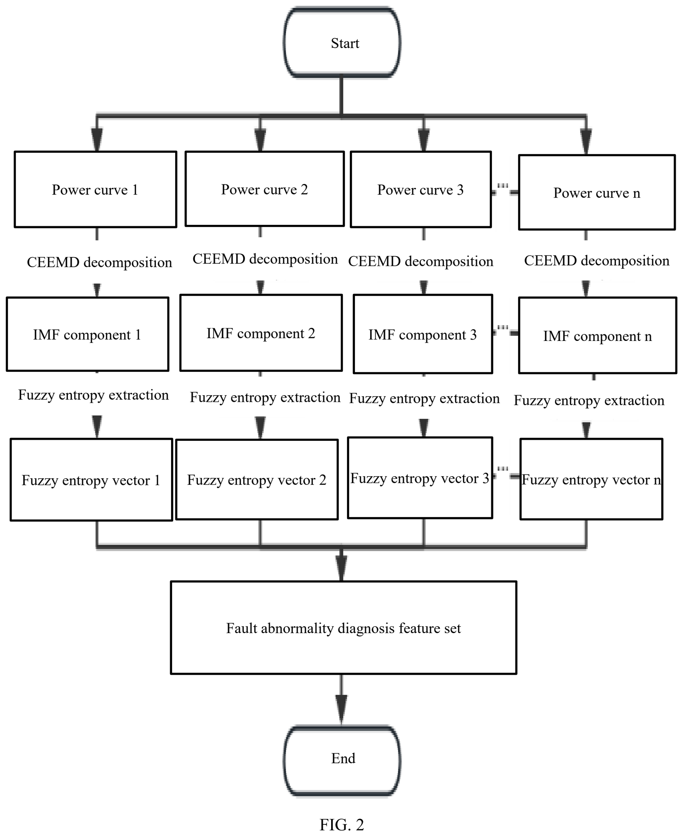

According to some embodiments of the present application, the step S11 of acquiring first feature information of a real-time switch action power curve includes extracting feature information corresponding to the real-time switch action power curve based on a CEEMD multi-scale fuzzy entropy. The solution is as follows:
In this feature extraction method, the switch action power curve is decomposed using a CEEMD algorithm to obtain a set of IMFs with different time scales and descending frequencies, thereby achieving adaptive multi-scale decomposition of an original signal. Then, a fuzzy entropy of each IMF component is extracted as a fault diagnosis feature parameter to construct a fault diagnosis feature set. This process is as shown in FIG. 2.

(1) IMF component acquisition through CEEMD decomposition

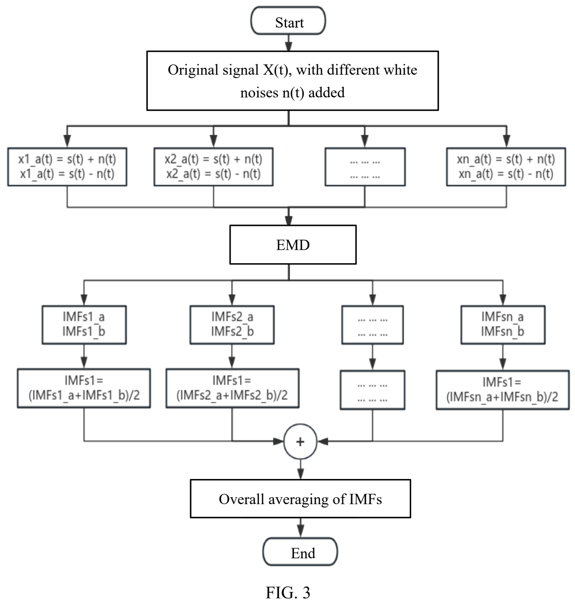

For a given original signal $x(t)$, first, the number $M$ of times of complementary ensemble empirical mode decomposition is initialized, then, a set of paired positive and negative white noise sequences $n(t)$ is added to the original signal $x(t)$, EMD decomposition is performed $M$ times on the original signal $x(t)$, and results of performing EMD decomposition M times are summed and averaged to eliminate the impact of white noise, thereby obtaining a final IMF component. The above process is as shown in FIG. 3.

(2) Fuzzy entropy of IMF

The fuzzy entropy is defined as follows:

$$\mathrm{FE}(m,r,N) = ln\,\varphi^m\,(r) - ln\,\varphi^{m+1}\,(r)$$

where m is the number of mode dimensions, r is a similarity tolerance parameter, N is an original data length, and $ln\varphi^n(r)$ is a relational dimension under n dimensions.

An original signal x(t) undergoes CEEMD decomposition to obtain IMFs with different time scales and descending frequencies, thereby achieving adaptive multi-scale decomposition of the original signal. A fuzzy entropy of each IMF component after decomposition is extracted as a feature parameter of the original signal, i.e., a multi-scale fuzzy entropy of the original signal, thereby constructing a feature set for switch fault diagnosis.

According to some embodiments of the present application, the step S12 of acquiring second feature information of switch action power curves in different operating states has the same principle as the step S11, and feature information of a switch action power curve in a known operating state is extracted.

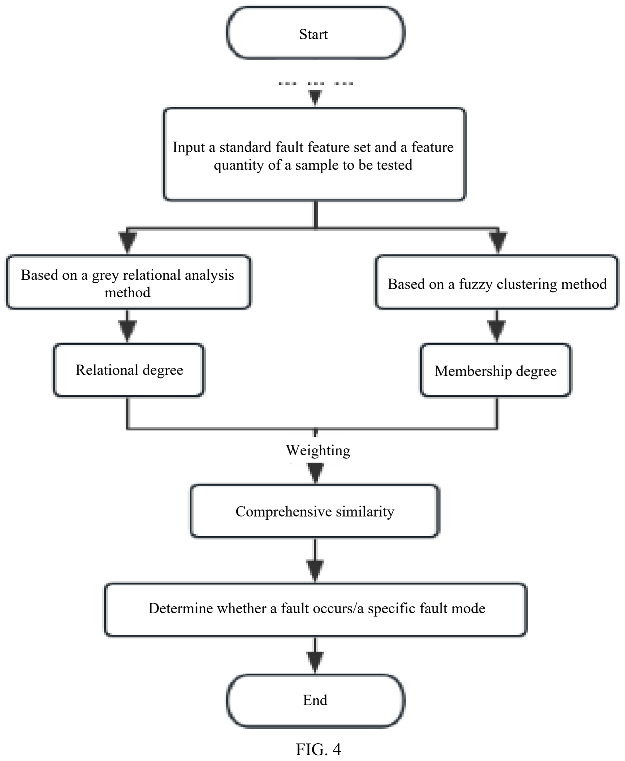

According to some embodiments of the present application, the step S13 of calculating, based on a grey relational analysis method and/or a fuzzy clustering method, a similarity between the first feature information and the second feature information corresponding to each fault type includes the following solution:
The diagnostic method based on grey relational analysis and fuzzy clustering draws on the heterogeneous ensemble idea in ensemble learning to combine two simple and fast weak diagnosers into a strong diagnoser. The grey relational analysis method yields "relational degrees" for different fault types, while the fuzzy clustering method yields "membership degrees" for different fault types. Both results are values between 0 and 1. This system weights the results of the two methods in a certain proportion to obtain a new diagnostic basis "comprehensive similarity", which is used to diagnose whether the switch action power curve is abnormal, such that the accuracy of abnormality diagnosis can be greatly improved, and missed alarms in a centralized railway signal monitoring system can be reduced. The above process is as shown in FIG. 4. The solution includes:

(1) Fault identification method based on grey relational analysis

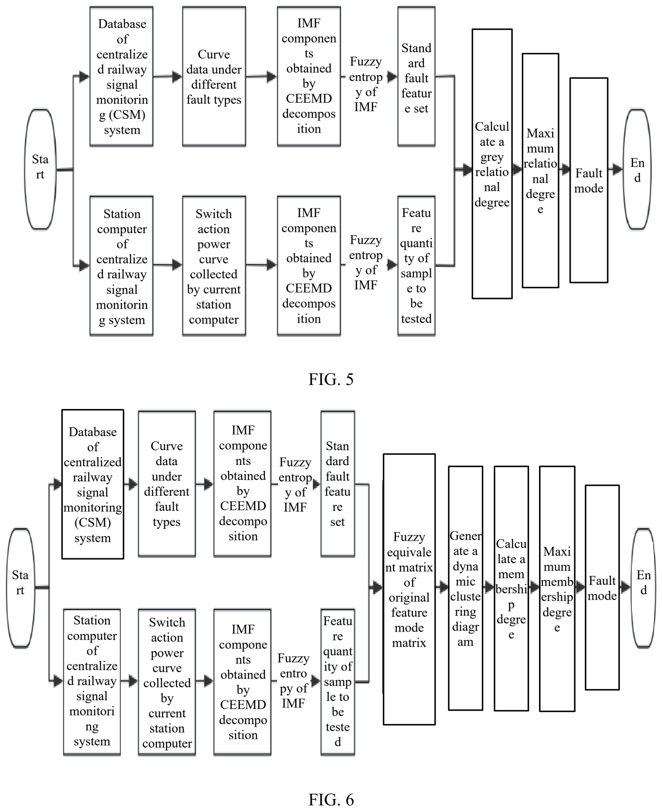

As shown in FIG. 5, the fault identification method based on grey relational analysis includes: establishing a fault diagnosis feature set $X$, setting a feature quantity of a sample to be identified, calculating an absolute difference between the feature quantity of the sample to be identified and each feature vector $X_i$ in the feature set X, calculating a minimum value and a maximum value of the absolute difference, calculating a grey relational coefficient between the feature quantity of the sample to be identified and the feature set X, calculating a grey relational degree between the feature quantity of the sample to be identified and each diagnostic feature vector based on the grey relational coefficient, and determining which type of fault in the fault feature set the current switch fault power curve belongs to based on the "grey relational degree".

(2) Fault identification method based on fuzzy clustering

As shown in FIG. 6, the fault identification method needs to first establish an original feature mode matrix X, which is a matrix composed of feature values from a normal power curve, various typical fault power curves, and a curve to be tested. Then, the matrix X is standardized by translation standard deviation transformation and translation range transformation, such that an average value of each variable is 0 and a standard deviation is 1, thereby eliminating the impact of different dimensions on data. The original matrix X is calculated using a distance method to obtain a fuzzy similarity matrix R. Then, a fuzzy equivalent matrix R* with transitivity is calculated. When λ varies from 1 to 0 in R*, a corresponding Boolean matrix is formed, thereby generating a dynamic clustering diagram. Based on the "membership degree" in the dynamic diagram, it is determined which type of fault in the fault feature set the current switch fault power curve belongs to.

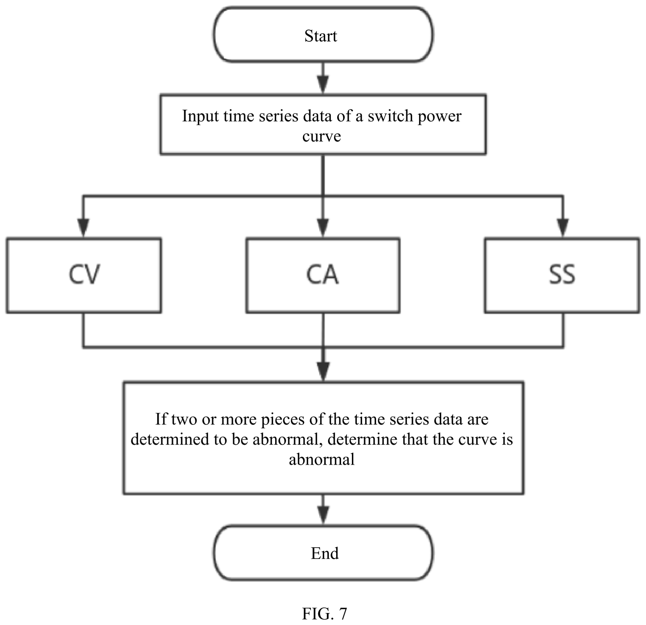

According to some embodiments of the present application, when the top two rankings of the diagnostic result "comprehensive similarity" are a specific fault type and a normal type (regardless of their order), and the "comprehensive similarities" are very close, there is a high probability of false determination. To avoid false determination, when this situation occurs, the diagnostic determination can be further enhanced, which is equivalent to adding a layer of false determination protection, thereby further improving the accuracy of abnormality diagnosis. In this embodiment, three simple and fast weak diagnosers, namely, a comparative value method diagnoser, a comparative amplitude method diagnoser, and a sequential value method diagnoser are combined into a strong diagnoser. When a diagnostic system is prone to false determination, this strong diagnoser assists it in further analysis. The specific process is as shown in FIG. 7.

(1) Comparative value method (CV)

Data of a switch action power curve corresponding to the past P normal switch operations is selected. For a specific time point, P points can be obtained as reference values, denoted as $D_i(t)$, where i = 1, ..., P. A static threshold T can be used to determine whether the data $D_i(t)$ of the switch power curve at a specific time point is abnormal (sudden increase/sudden decrease). If $D_i(t)$ is less than a product of a minimum value at the same time point in the past P times and a threshold T, the data at that time point is considered an abnormal point (sudden decrease); and if $D_i(t)$ is greater than a product of a maximum value at the same time point in the past P times and a threshold T, the data $D_i(t)$ at that time point is considered an abnormal point (sudden increase). A specific calculation formula is as follows:

$$\text{Result} = \begin{cases} abnormal(sudden\ increase), D_i(t) > max(\ D_i(t), i \in (1,P)) * \max\_T \\ abnormal(sudden\ decrease), D_i(t) < min(\ D_i(t), i \in (1,P)) * \min\_T \\ normal, \quad , \quad others \end{cases}$$

where Result represents a determination result, max_T represents a maximum threshold T, min_T represents a minimum threshold T, min(·) denotes taking a minimum value of ·, and max(·) denotes taking a maximum value of ·.

(2) Comparative amplitude method (CA)

Data of a switch action power curve corresponding to the past P normal switch operations is selected. For a specific time point, P amplitudes can be obtained. Absolute values of the P amplitudes are used as standards. If the amplitude Damp(t) at a time point t is greater than a product of a maximum amplitude at the same time point of day over the past P days and a threshold T, and the amplitude at the time point t is greater than 0, it is considered that an abnormality (sudden increase) occurs at that time point; and if the amplitude Damp(t) at a time point t is greater than a product of a maximum amplitude at the same time point of day over the past P days and a threshold T, and the amplitude at the time point t is less than 0, it is considered that an abnormality (sudden decrease) occurs at that time point. A specific calculation formula is as follows:

$$\text{Result} = \begin{cases} abnormal(sudden\ increase), D_{amp}(t) > amplitude * T \& D_{amp}(t) > 0 \\ abnormal(sudden\ decrease), D_{amp}(t) > amplitude * T \& D_{amp}(t) < 0 \\ normal,\ others \end{cases}$$

$$amplitude = \max\left[\left\|\frac{D_i(t) - D_i(t-1)}{D_i(t-1)}\right\|\right], i \in 1,2,\dots P$$

(3) Sequential value method (SS)

A size of a time window is set to W, and a detection value D(t) at a time point t is compared with data values at the past W time points (denoted as $D_j$). If the value is greater than a threshold T, 1 is added to count. If count exceeds a set count_num, the point is considered an abnormal point. A specific calculation formula is as follows:

$$Result = \begin{cases} 异常, & count\left(\sum_{i=0}^{W}(D(t)-i) > T\right) > count\_num \\ 正常, & 其它 \end{cases}$$

| 异常 | abnormal |
|------|----------|
| 正常 | normal |
| 其他 | others |

According to some embodiments of the present application, a method for setting the threshold T refers to an average value avg, a maximum value max, and a minimum value min within a certain period of time in the past (for example, within the window), and then a minimum value of max-avg and avg-min is taken. A specific calculation formula is as follows:

$$T = \min(\max - avg, avg - \min)$$

The number of time points usually selected in the above three methods is N, where $N \geq 3n$, and the same number N of time points are selected in three time periods of switch rotation: start, in-progress, and end. When one or more time points are abnormal, it is determined that an abnormality occurs.

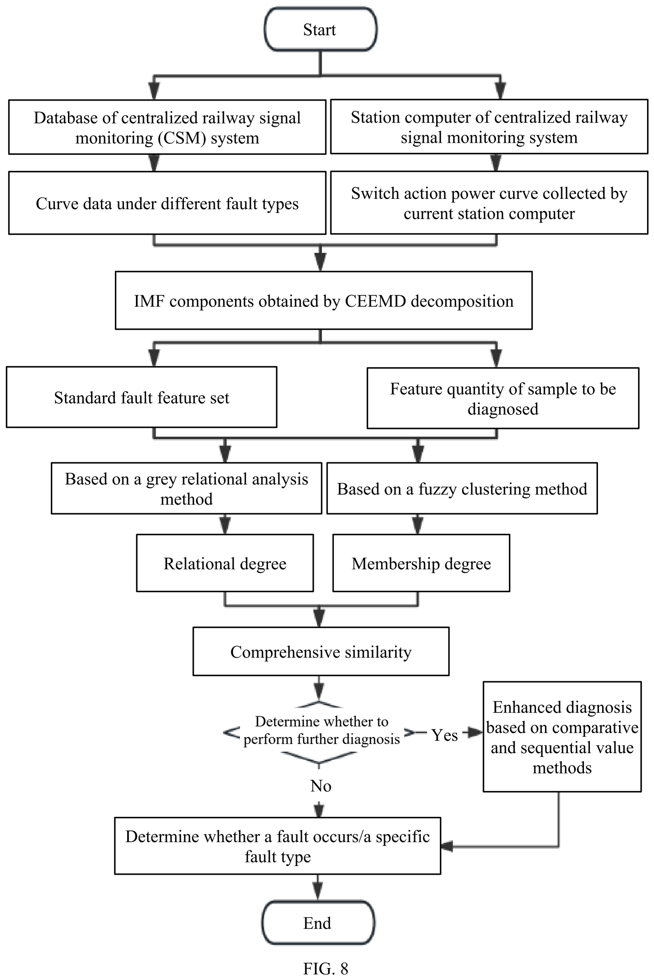

FIG. 8 shows a method and system for diagnosing an abnormality in an electrical characteristic curve (a switch action power curve) of railway signal equipment based on CEEMD multi-scale fuzzy entropy feature extraction and heterogeneous ensemble idea provided in an embodiment, with a complete process as follows:

Curves under different fault types are acquired from a database of a centralized railway signal monitoring (CSM) system, a switch action power curve collected by a current station computer is acquired from the station computer of the centralized railway signal monitoring system, CEEMD decomposition is performed on the curves under different fault types and the switch action power curve to obtain corresponding IMF components, and a standard fault feature set and a feature quantity of a sample to be diagnosed are constructed. A relational degree and a membership degree between the standard fault feature set and the feature quantity of the sample to be diagnosed are calculated based on grey relational analysis and fuzzy clustering, and weighting is performed to obtain a comprehensive similarity, thereby determining an operating state. Subsequently, it is determined whether several highest comprehensive similarities correspond to the same operating state type. If the several highest comprehensive similarities correspond to the same operating state type, the current determination is correct, and whether a fault occurs and a fault type are determined. If the several highest comprehensive similarities do not correspond to the same operating state type, the diagnostic result is further analyzed based on the above diagnoser to finally determine the fault type.

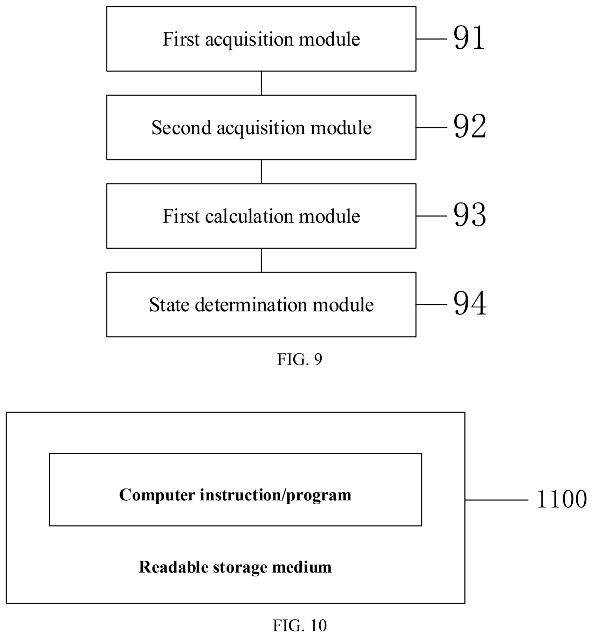

Based on the same inventive concept, as shown in FIG. 9, the present application further provides a system for monitoring a state of a switch power curve, including: a first acquisition module 91, configured to acquire first feature information of a real-time switch action power curve; a second acquisition module 92, configured to acquire second feature information of switch action power curves in different operating states; a first calculation module 93, configured to calculate, based on a grey relational analysis method and/or a fuzzy clustering method, a similarity between the first feature information and the second feature information corresponding to each fault type; and a state determination module 94, configured to determine an operating state corresponding to the real-time switch action power curve based on the similarity. As shown in FIG. 10, the present application further provides a computer-readable storage medium 1100, where the computer-readable storage medium 1100 has a computer program or instruction stored thereon, and when executed by a processor, the computer program or instruction is at least used to implement the above method.

It is obvious that those of ordinary skill in the art can make various modifications and variations to the present application without departing from the spirit and scope of the present application. Thus, if such modifications and variations of the present application fall within the scope of the claims of the present application and their equivalent technologies, the present application also intends to encompass such modifications and variations.

**Claims**

1.  A method for monitoring a state of a switch power curve, **characterized by** comprising:

    acquiring first feature information of a real-time switch action power curve;
    acquiring second feature information of switch action power curves in different operating states;
    based on a grey relational analysis method and/or a fuzzy clustering method, calculating a similarity between the first feature information and the second feature information corresponding to each fault type; and
    determining an operating state corresponding to the real-time switch action power curve based on the similarity.

2.  The method according to claim 1, **characterized in that** the acquiring first feature information of a real-time switch action power curve comprises:

    acquiring an intrinsic mode function (IMF) component of the real-time switch action power curve; and
    acquiring a fuzzy entropy of the IMF component as the first feature information.

3.  The method according to claim 2, **characterized in that** the acquiring an IMF component of the real-time switch action power curve comprises: decomposing the real-time switch action power curve based on complementary ensemble empirical mode decomposition (CEEMD) to obtain the IMF component.

4.  The method according to claim 3, **characterized in that** after determining an operating state corresponding to the real-time switch action power curve based on the similarity, the method further comprises:

    constructing a similarity set based on several calculated similarities;
    sorting the similarity set in descending order of the similarities;
    determining whether operating states corresponding to first several similarities are all normal or all abnormal; if the operating states corresponding to the first several similarities are not all normal or not all abnormal, determining a difference between the first several similarities; and
    when it is determined that the difference between the first several similarities is less than a threshold, performing a secondary determination on the operating state corresponding to the real-time switch action power curve based on at least one of a comparative value method, a comparative amplitude method, or a sequential value method.

5.  The method according to claim 4, **characterized in that** the performing a determination on the operating state corresponding to the real-time switch action power curve based on a comparative value method comprises:

    acquiring a maximum value among values of several normal switch action power curves at a target time point;
    correcting the maximum value based on a preset static threshold to obtain a reference maximum value; and
    determining whether a value of the real-time switch action power curve at the target time point is greater than the reference maximum value, and if the value of the real-time switch action power curve at the target time point is greater than the reference maximum value, determining that the real-time switch action power curve undergoes a sudden increase at the target time point.

6.  The method according to claim 4, **characterized in that** the performing a determination on the operating state corresponding to the real-time switch action power curve based on a comparative amplitude method comprises:

    acquiring a maximum amplitude of several normal switch action power curves at a target time point;

correcting the maximum amplitude based on a preset static threshold to obtain a reference maximum amplitude; and

determining whether an amplitude of the real-time switch action power curve at the target time point is greater than zero and the reference maximum amplitude, and if the amplitude of the real-time switch action power curve at the target time point is greater than zero and the reference maximum amplitude, determining that the real-time switch action power curve undergoes a sudden increase at the target time point.

7. The method according to claim 4, **characterized in that** the performing a determination on the operating state corresponding to the real-time switch action power curve based on a sequential value method comprises:

acquiring target data of the real-time switch action power curve at a target time point;
acquiring a difference between the target data and each piece of data in a preset time window before the target time point, and determining the number of differences greater than a preset static threshold; and
when it is determined that the number of differences is greater than the threshold, determining that the target data is abnormal.

8. The method according to any one of claims 5 to 7, **characterized in that** the static threshold is determined based on historical switch action power curve data.

9. A system for monitoring a state of a switch power curve, **characterized by** comprising:

a first acquisition module, configured to acquire first feature information of a real-time switch action power curve;
a second acquisition module, configured to acquire second feature information of switch action power curves in different operating states;
a first calculation module, configured to calculate, based on a grey relational analysis method and/or a fuzzy clustering method, a similarity between the first feature information and the second feature information corresponding to each fault type; and
a state determination module, configured to determine an operating state corresponding to the real-time switch action power curve based on the similarity.

10. A computer-readable storage medium, **characterized by** having a computer program or instruction stored thereon, wherein when executed by a processor, the computer program or instruction is at least used to implement the method according to any one of claims 1 to 8.

| Acquire first feature information of a real-time switch action power curve | — 11 |

| Acquire second feature information of switch action power curves in different operating states | — 12 |

| Based on a grey relational analysis method and/or a fuzzy clustering method, calculating a similarity between the first feature information and the second feature information corresponding to each fault type | — 13 |

| Determine an operating state corresponding to the real-time switch action power curve based on the similarity | — 14 |

FIG. 1

```
                              ┌─────────────┐
                              │    Start    │
                              └─────────────┘
```

| Power curve 1 | Power curve 2 | Power curve 3 | ···· | Power curve n |

CEEMD decomposition    CEEMD decomposition    CEEMD decomposition    CEEMD decomposition

| IMF component 1 | IMF component 2 | IMF component 3 | ···· | IMF component n |

Fuzzy entropy extraction    Fuzzy entropy extraction    Fuzzy entropy extraction    Fuzzy entropy extraction

| Fuzzy entropy vector 1 | Fuzzy entropy vector 2 | Fuzzy entropy vector 3 | ···· | Fuzzy entropy vector n |

| Fault abnormality diagnosis feature set |

```
                              ┌─────────────┐
                              │     End     │
                              └─────────────┘
```

FIG. 2

Start

Original signal X(t), with different white noises n(t) added

x1_a(t) = s(t) + n(t)
x1_a(t) = s(t) - n(t)

x2_a(t) = s(t) + n(t)
x2_a(t) = s(t) - n(t)

... ... ...
... ... ...

xn_a(t) = s(t) + n(t)
xn_a(t) = s(t) - n(t)

EMD

IMFs1_a
IMFs1_b

IMFs2_a
IMFs2_b

... ... ...
... ... ...

IMFsn_a
IMFsn_b

IMFs1=
(IMFs1_a+IMFs1_b)/2

IMFs1=
(IMFs2_a+IMFs2_b)/2

... ... ...
... ... ...

IMFs1=
(IMFsn_a+IMFsn_b)/2

+

Overall averaging of IMFs

End

FIG. 3

FIG. 4

FIG. 5

FIG. 6

```
                          ┌─────────────────────┐
                          │        Start        │
                          └──────────┬──────────┘
                                     │
                                     ▼
                    ┌────────────────────────────────────┐
                    │ Input time series data of a switch  │
                    │            power curve              │
                    └────────────────┬───────────────────┘
                                     │
        ┌────────────────────────────┼────────────────────────────┐
        ▼                            ▼                            ▼
  ┌───────────┐              ┌───────────┐              ┌───────────┐
  │    CV     │              │    CA     │              │    SS     │
  └─────┬─────┘              └─────┬─────┘              └─────┬─────┘
        │                          │                          │
        └────────────────────────┐ │ ┌────────────────────────┘
                                  ▼ ▼ ▼
                    ┌────────────────────────────────────┐
                    │ If two or more pieces of the time   │
                    │ series data are determined to be    │
                    │ abnormal, determine that the curve  │
                    │            is abnormal              │
                    └────────────────┬───────────────────┘
                                     ▼
                          ┌─────────────────────┐
                          │        End          │
                          └─────────────────────┘
```

FIG. 7

FIG. 8

First acquisition module — 91

Second acquisition module — 92

First calculation module — 93

State determination module — 94

FIG. 9

**Computer instruction/program**

**Readable storage medium**

— 1100

FIG. 10

## INTERNATIONAL SEARCH REPORT

| International application No. |
|---|
| **PCT/CN2024/134670** |

### A. CLASSIFICATION OF SUBJECT MATTER

B61L27/53(2022.01)i

According to International Patent Classification (IPC) or to both national classification and IPC

### B. FIELDS SEARCHED

Minimum documentation searched (classification system followed by classification symbols)

IPC: B61L

Documentation searched other than minimum documentation to the extent that such documents are included in the fields searched

Electronic data base consulted during the international search (name of data base and, where practicable, search terms used)

CNABS: CNTXT; WPABS; VEN; ENTXT; ENTXTC; CNKI; 百度, BAIDU: 北京全路通信信号、刘龙标, 尹春雷, 叶维高, 胡铁超, 李江喆, 道岔, 转辙机, 曲线, 相似, 近似, 故障, 模糊, 聚类, 熵, 灰色关联, turnout, switch, action, power, curve, similarity, fault, fuzzy, cluster+, entropy, grey relational

### C. DOCUMENTS CONSIDERED TO BE RELEVANT

| Category* | Citation of document, with indication, where appropriate, of the relevant passages | Relevant to claim No. |
|---|---|---|
| Y | CN 107203746 A (TONGJI UNIVERSITY) 26 September 2017 (2017-09-26) description, paragraphs [0006]-[0010] | 1-3, 9, 10 |
| Y | 魏文军 等 (WEI, Wenjun et al.). "基于EEMD多尺度样本熵的S700K转辙机故障诊断 (Fault Diagnosis of S700K Switch Machine Based on EEMD Multiscale Sample Entropy)" 中南大学学报(自然科学版) (Journal of Central South University (Science and Technology)), Vol. 50, No. 11, 26 November 2019 (2019-11-26), pages 2763-2772 ISSN: 1672-7207, pages 2763-2772 | 1-3, 9, 10 |
| A | CN 111915061 A (TONGJI UNIVERSITY) 10 November 2020 (2020-11-10) entire document | 1-10 |
| A | CN 109934245 A (TONGJI UNIVERSITY) 25 June 2019 (2019-06-25) entire document | 1-10 |
| A | CN 116467661 A (HUNAN HUAHUITE AUTOMATION TECHNOLOGY CO., LTD.) 21 July 2023 (2023-07-21) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **17 February 2025** | **26 February 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/134670**

| Patent document cited in search report | | | Publication date (day/month/year) | Patent family member(s) | Publication date (day/month/year) |
|---|---|---|---|---|---|
| CN | 107203746 | A | 26 September 2017 | None | |
| CN | 111915061 | A | 10 November 2020 | None | |
| CN | 109934245 | A | 25 June 2019 | None | |
| CN | 116467661 | A | 21 July 2023 | None | |

Form PCT/ISA/210 (patent family annex) (July 2022)